# EUROPÄISCHE PATENTSCHRIFT

(11) **EP 3 181 773 B1**
(45) Veröffentlichungstag und Bekanntmachung des Hinweises auf die Patenterteilung: **26.08.2020**
(21) Anmeldenummer: 16203263.5
(22) Anmeldetag: 09.12.2016
(51) Int. Cl.: E04C 1/39, F16L 3/00, F24D 3/14

(54) **MAUERWERKSVERBAND ZUR ENERGIEGEWINNUNG**
MASONRY COMPOUND FOR GENERATING ENERGY
MACONNERIE POUR PRODUCTION D'ÉNERGIE

(30) Priorität: 14.12.2015 DE 102015121728
(43) Veröffentlichungstag der Anmeldung: 21.06.2017
(73) Patentinhaber: Hagemeister GmbH & Co. KG, Ziegelwerk, 48301 Nottuin (DE)
(72) Erfinder: Penzenstadler, Andreas, 48565 Steinfurt (DE); Mähner, Dietmar, 48249 Dülmen (DE); Lengers, Jacob, 48153 Münster (DE); Brand, Carina, 49477 Ibbenbüren (DE)
(74) Vertreter: Meinke, Jochen

(56) Entgegenhaltungen:
- EP-A1- 0 522 549
- EP-A2- 1 980 679
- DE-A1- 3 011 289
- DE-U1- 29 503 619
- DE-U1- 29 803 142

## Beschreibung

Die Erfindung betrifft einen Mauerwerksverband mit einer Vielzahl von neben- und/oder übereinander angeordneten Verblendmauersteinen mit den Merkmalen des Patentanspruchs 1 und ein Verfahren zum Aufbau eines Mauerwerksverbandes mit den Merkmalen des Patentanspruchs 11.

Um die Sonnenenergie, die insbesondere auf die Südseite eines Hauses strahlt, sinnvoll zu nutzen, ist es bekannt Hauswände mit Rohrleitungen zu versehen, in denen ein Fluid zirkuliert, das sich durch die Sonnenenergie erwärmt. Ein solcher Mauerwerksverband ist aus EP 1 980 679 A2 bekannt. Dieser Mauerwerksverband besteht aus vollen Verblendmauersteinen, wobei die längs gerichtete Ausnehmung an der Oberseite eines jeden Verblendmauersteins als Rinne ausgebildet ist, die ein halbkreisförmiges Querschnittsprofil aufweist. Die hierfür benötigten vollen Verblendmauersteine werden mit einer Extrusionsanlage durch Strangpressen hergestellt, wobei in den Strang des noch weichen Werkstoffes eine Rinne eingeformt wird.

Nachteilig an der in EP 1 980 679 A2 vorgestellten Lösung ist, dass die Herstellung der einzelnen Verblendmauersteine zeitaufwendig und kostenintensiv ist, da hierfür eine spezielle Extrusionsanlage benötigt wird. Mit einer solchen Anlage sind zwar volle Verblendmauersteine herstellbar, jedoch keine Mauersteine mit Hohlräumen, die bessere Dämmeigenschaften aufweisen. Ferner müssen auch die Verblendmauersteine, in denen keine Rohrleitungen vorgesehen sind, mit der Extrusionsanlage hergestellt werden, um einen einheitlichen Farbton aller Verblendmauersteine zu gewährleisten.

Ein weiterer Nachteil ergibt sich beim Aufbau des Mauerwerksverbandes, bei dem die Rohrleitung nur lose in eine Rille gelegt und danach der Mörtel aufgebracht wird. Hierbei kommt es oft vor, dass durch eine Belastung der Rohrleitung auf einer Seite die gleiche Rohrleitung auf einer anderen Seite herausspringt und den Mörtel löst. Dies hat zur Folge, dass der Aufbau des Mauerwerksverbandes mehr Zeit beansprucht und ein hohes Maß an handwerklichem Geschick erfordert.

Aus EP 0 522 549 A1 ist ein Mauerwerksverband mit einer Vielzahl von neben- und/oder übereinander angeordneten Verblendmauersteinen mit den Merkmalen des Oberbegriffs des Patentanspruchs 1 bekannt. Aus DE 295 03 619 U1 ist grundsätzlich eine Kabelklemmschelle zu Befestigung von Kabeln und Rohren in einem Schlitz eines Mauerwerkes bekannt. Aus DE 30 11 289 A1 sind ein Verfahren und eine Vorrichtung zur Wärmerückgewinnung bei Gebäuden bekannt, bei welchem in der Gebäudeaußenwand Rohrschlangen verlegt sind, in denen ein Medium zirkuliert.

Aufgabe der Erfindung ist daher, einen Mauerwerksverband der eingangs bezeichneten Art anzugeben, der kostengünstig und einfach aufbaubar ist und die Effizienz der Energiegewinnung erhöht.

Diese Aufgabe wird bei einem Mauerwerksverband der eingangs bezeichneten Art erfindungsgemäß durch die kennzeichnenden Merkmale des Patentanspruchs 1 gelöst.

Es wird somit ein Mauerwerksverband zur Verfügung gestellt, der die Nutzung der eingestrahlten Sonnenenergie ermöglicht und dessen einzelne Verblendmauersteine kostengünstig herstellbar sind, da die Ausnehmung im jeweiligen Verblendmauerstein als rechteckförmige Nut ausgebildet ist. Vorteilhaft hieran ist, dass diese Nut mit einer Fräse einfach herstellbar ist und auch bereits hergestellte Verblendmauersteine nachträglich mit einer solchen Nut versehen werden können. Hierdurch werden die Baukosten erheblich reduziert, da handelsübliche Verblendmauersteine nutzbar sind und nur ein Teil dieser Steine eine nachträgliche Bearbeitung benötigt. Dies ermöglicht auch den Einsatz beliebiger Verblendmauersteine, die nicht mit einer Extrusionsanlage herstellbar sind. Das Befestigungselement, das den jeweiligen Rohrleitungsabschnitt in der rechteckförmigen Nut sicher fixiert, ermöglicht einen einfachen Aufbau des Mauerwerksverbands und reduziert die Arbeitskosten, da ein zweiter Maurer zur Fixierung des Rohrleitungsabschnitts entfällt.

Dabei ist vorgesehen, dass der jeweilige Rohrleitungsabschnitt mit mehreren Befestigungselementen in der Nut fixiert ist, so dass ein Herausrutschen eines einzelnen Befestigungselements die Einbaulage des Rohrleitungsabschnitts nicht ändert.

Außerdem weist der Mauerwerksverband wenigstens einen Abschlussverblendmauerstein auf, der in Einbaulage an einer Schmalseite eine sich vertikal erstreckende Aussparung aufweist, die ein gebogenes Rohrleitungselement aufnimmt. Vorteilhaft an den Abschlussverblendmauerstein ist, dass mehrere vertikal verlaufende Rohrleitungsabschnitte, die in verschiedenen Höhen eingebaut sind, miteinander verbindbar sind und somit eine optimale Aufnahme der Wärmeenergie ermöglichen.

Unter dem Begriff Rohrleitungsabschnitt ist im Sinne der Erfindung auch zu verstehen, dass dieser aus einem einzigen Endlosrohr bestehen kann, welcher den gesamten Mauerwerksverband durchdringt.

Weiterhin ist bevorzugt vorgesehen, dass mehrere Rohrleitungselemente einen Fluidkreislauf bilden und der Mauerwerksverband mehrere solcher Fluidkreisläufe aufweist. Sollte einer der Fluidkreisläufe zum Beispiel durch ein Leck ausfallen, können die anderen Fluidkreisläufe weiter betrieben werden. Hierdurch ist die Energiegewinnung während der Reparatur des ausgefallenen Fluidkreislaufs weiter gesichert. Wenn eine Reparatur nicht möglich ist, kann der entsprechende Fluidkreislauf dauerhaft abgetrennt werden.

Es ist bevorzugt, dass das Befestigungselement ein Klemmbügel ist. Dieser Klemmbügel lässt sich mit einer Hand und ohne großen Aufwand um den Rohrleitungsabschnitt legen. Anschließend wird der Klemmbügel mit dem aufgenommen Rohrleitungsabschnitt in die Nut gesteckt.

In einer weiteren Ausgestaltung ist vorgesehen, dass der Querschnitt des Befestigungselementes ein u-förmiges Profil aufweist. Die Fertigung solcher Profile ist einfach und daher kostengünstig.

Eine weitere Ausgestaltung sieht vor, dass der Querschnitt des Befestigungselementes ein trapezförmiges Profil aufweist, so dass sich das Befestigungselement beim Einstecken in die Nut verkeilt und die Reibung zwischen dem Befestigungselement und der Nut erhöht. Somit wird die Fixierung des Rohrleitungsabschnitts zusätzlich stabilisiert.

Weiterhin ist vorgesehen, dass eine der Außenflächen des Befestigungselementes erhaben ist, um die Reibung zwischen mit dem Befestigungselement und den Innenflächen der Nut weiter zu erhöhen.

Als besonders vorteilhafte Ausführungsform ist vorgesehen, dass wenigstens eine der Außenflächen des Befestigungselements Widerhaken aufweist. Diese Widerhaken führen zu einer sehr starken Verbindung zwischen dem Befestigungselement und der Nut, so dass ein Herauslösen des Befestigungselementes nur mit einem Werkzeug möglich.

In einer weiteren Ausgestaltung ist vorgesehen, dass wenigstens eine der Innenflächen des Befestigungselements eine zum jeweiligen Rohrleitungsabschnitt komplementäre Form aufweist, um eine formschlüssige Verbindung zwischen dem Rohrleitungsabschnitt und dem Befestigungselement zu ermöglichen.

Weiterhin ist bevorzugt, dass das Befestigungselement aus Kunststoff besteht. Dies hat den Vorteil, dass die Befestigungselemente kostengünstig und einfach gefertigt werden können.

Es ist besonders bevorzugt, dass sich die Nut in Einbaulage des Verblendmauersteins horizontal erstreckt und parallel zur Stirnseite des Verblendmauersteins ausgerichtet ist. Eine solche Nut hat den Vorteil, dass der darin positionierte Rohrleitungsabschnitt gleichmäßig erwärmt wird und somit eine optimale Aufnahme der Wärmeenergie gewährleistet ist.

Eine besondere Ausführungsform sieht vor, dass der Querschnitt der Nut quadratisch oder trapezförmig ausgebildet ist. Eine quadratische Form lässt sich sehr günstig herstellen und eine trapezförmige Form, die komplementär zur trapezförmigen Form des Befestigungselements ist, ermöglicht eine besonders starke Fixierung durch Formschluss.

Eine weitere besondere Ausführungsform sieht vor, dass der Verblendmauerstein ein Ziegel, Klinker, Lochklinker oder Blendziegel ist. Welcher Stein verwendet wird, hängt vom Verwendungszweck und von der Region ab. Da z.B. Lochklinker gute Dämmeigenschaften aufweisen und sehr witterungsbeständig sind, werden diese bevorzugt in küstennahen Regionen eingesetzt.

Ferner ist ein Verfahren mit den Merkmalen des Patentanspruchs 11 zum Aufbau eines Mauerwerksverbandes vorgesehen, bei dem erfindungsgemäß vorgesehen ist, dass der Mörtel den Spalt ausfüllt, wobei der Rohrleitungsabschnitt vollständig vom Mörtel eingeschlossen wird und die Viskosität des Mörtels so zu wählen ist, dass Lufteinschlüsse zwischen dem Verblendmauerstein und dem Rohrleitungsabschnitt nicht entstehen. Ein mögliches Verfahren ist aus DE 298 03 142 U1 bekannt.

Weitere Merkmale, Einzelheiten und Vorteile der Erfindung ergeben sich aufgrund der nachfolgenden Beschreibung sowie anhand der Zeichnungen. Einander entsprechende Gegenstände oder Elemente sind in allen Figuren mit dem gleichen Bezugszeichen versehen. Es zeigt
- Fig. 1: einen erfindungsgemäßen Mauerwerksverband,
- Fig. 2: einen Ausschnitt eines erfindungsgemäßen Mauerwerksverbands,
- Fig. 3: eine Schnittdarstellung entlang der C-C-Linie in Fig. 2,
- Fig. 4: eine Draufsicht auf einen Abschlussverblendmauerstein,
- Fig. 5: eine Schnittdarstellung entlang der B-B-Linie in Fig. 4,
- Fig. 6: ein Befestigungselement,
- Fig. 7: eine perspektivische Darstellung einer Hauswand mit einem erfindungsgemäßen Mauerwerksverband als Fassade,
- Fig. 8: eine Schnittdarstellung eines Verblendmauersteines mit einem eingelegten Rohrleitungsabschnitt, bevor die Nut mit Mörtel aufgefüllt wird.

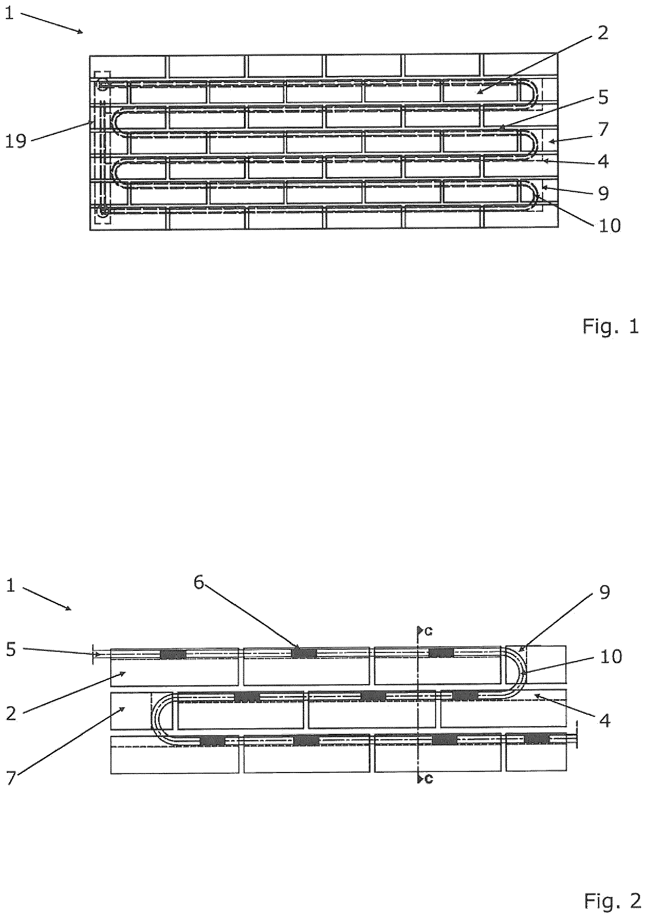

Figur 1 zeigt einen erfindungsgemäßen Mauerwerksverband 1 mit Verblendmauersteinen 2, die in Einbaulage an ihrer Oberseite eine längs gerichtete Ausnehmung aufweisen, die als rechteckförmig ausgeschnittene Nut 4 ausgebildet ist. Die benachbarte Verblendmauersteine 2 sind so angeordnet, dass ihre Nuten 4 miteinander fluchten und die eingelegten Rohrleitungsabschnitte 2 miteinander verbunden sind. Das in den Rohrleitungsabschnitten 2 zirkulierende Fluid wird einem nicht gezeigten Wärmetauscher zugeführt. Unter dem Begriff Rohrleitungsabschnitt soll im Rahmen der Erfindung auch ein Endlosrohr verstanden werden, das den kompletten Mauerwerksverband, d.h. die Nuten 4 aller Verblendmauersteine 2, durchdringt.

Die in der untersten Reihe des Mauerwerksverband 1 angeordneten Verblendmauersteine 2 liegen in Einbaulage mit ihrer Unterseite 18, die keine Ausnehmung aufweist, auf einem nicht gezeigten Fundament oder Erdboden auf. Die Verblendmauersteine 2 einer Reihe sind zu der nächst tieferen oder höheren Reihe in der horizontalen Ebene versetzt angeordnet, wobei jeweils ein Randstein einer Reihe als Abschlussverblendmauerstein 7 ausgebildet ist. Durch die Aussparungen 9 der Abschlussverblendmauersteine 7 sind gebogene Rohrleitungsabschnitte 10 geführt, die zwei Reihen miteinander verbinden. Bei einem Endlosrohr sind diese Rohrleitungsabschnitte 10 keine Einzelteile, sondern nur entsprechend gebogene Bereiche des Endlosrohrs.

In Fig. 2 ist ein Ausschnitt eines erfindungsgemäßen Mauerwerksverbands 1 dargestellt. Die Befestigungselemente 6 fixieren die Rohrleitungsabschnitte 5 in den Nuten 4, wobei in jedem Verblendmauerstein 2 wenigstens ein Befestigungselement 6 eingebracht ist. In den Fugen zwischen den einzelnen Verblendmauersteinen 2 ist z.B. Mörtel aufgetragen.

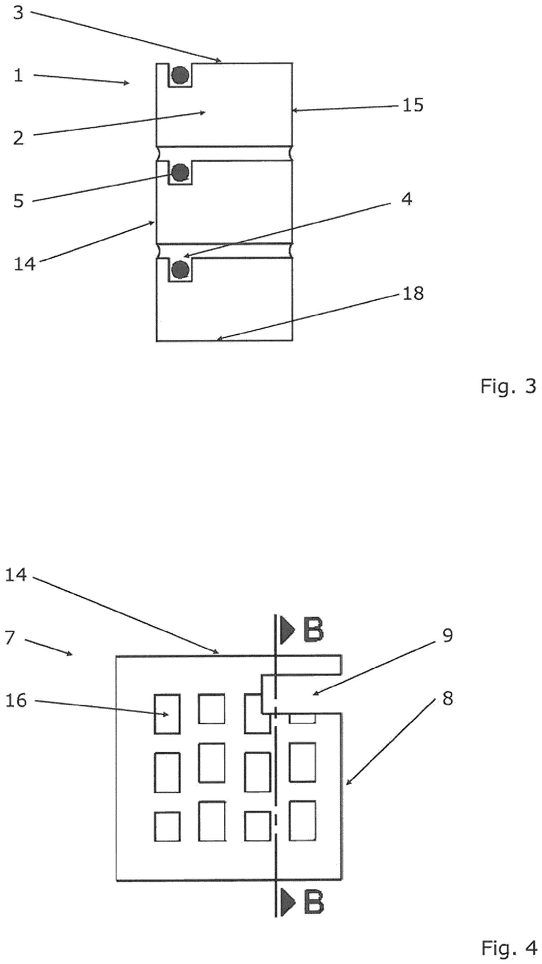

Figur 3 zeigt eine Schnittdarstellung entlang der C-C-Linie des in Fig. 2 dargestellten Mauerwerksverbands. Die Nuten 4 sind ein Einbaulage an der Oberseite der Verblendmauersteine 2 angeordnet, wobei die Nuten 4 näher an den vorderen Stirnseiten 14 als an der Rückseite 15 positioniert sind. Die Stirnseiten 14 bilden die Außenfassade des Mauerwerksverbands, auf die die Sonnenstrahlung direkt strahlt. Da die Rohrleitungsabschnitte 2 nahe an den Stirnseiten 14 angeordnet sind, wird ein großer Teil der Wärmeenergie vom Fluid aufgenommen und zum nicht dargestellten Wärmetauscher geführt.

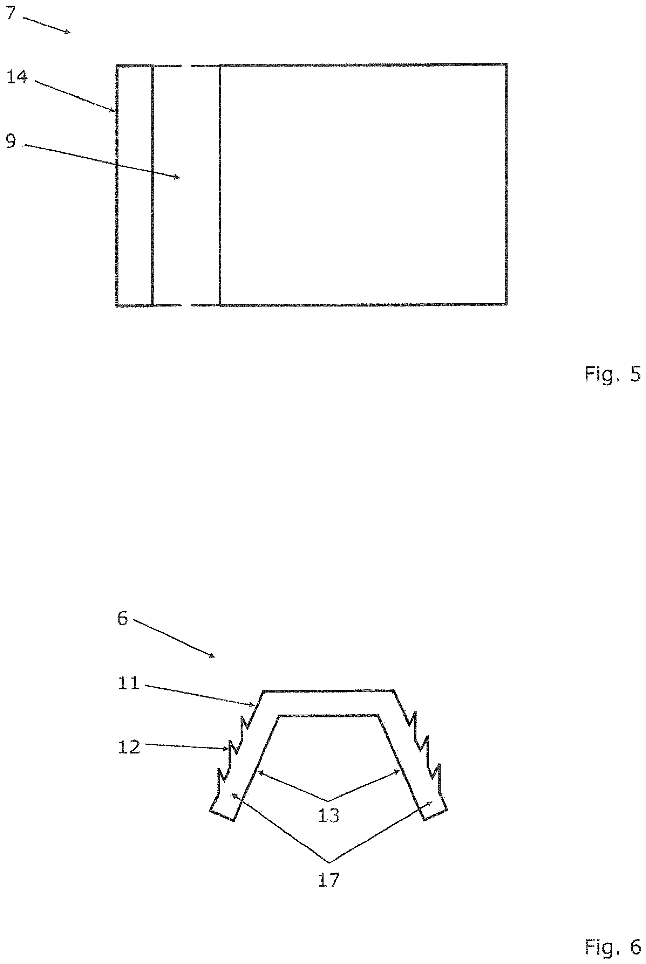

In Fig. 4 ist eine Draufsicht auf einen Abschlussverblendmauerstein 7 gezeigt, der sowohl Hohlräume 16 als auch eine Aussparung 9 aufweist. Diese Aussparung 9 ist an der Schmalseite 8 angeordnet und erstreckt sich parallel zur Stirnseite 14. Eine Schnittdarstellung entlang der B-B-Linie in Fig. 5 gezeigt.

In Fig. 6 ist ein klemmbügelartiges Befestigungselement 6 dargestellt, das ein trapezförmiges Querschnittsprofil aufweist, wobei die Innenflächen 13 der Profilseiten 17 glatt ausgestaltet sind und die Außenflächen 11 Widerhaken 12 aufweisen. Beim Einstecken eines solchen Befestigungselementes 6 in eine Nut 4 werden die Profilseiten 17 zusammengedrückt, sodass sich die Widerhaken 12 in die Innenflächen der Nut 4 verkeilen.

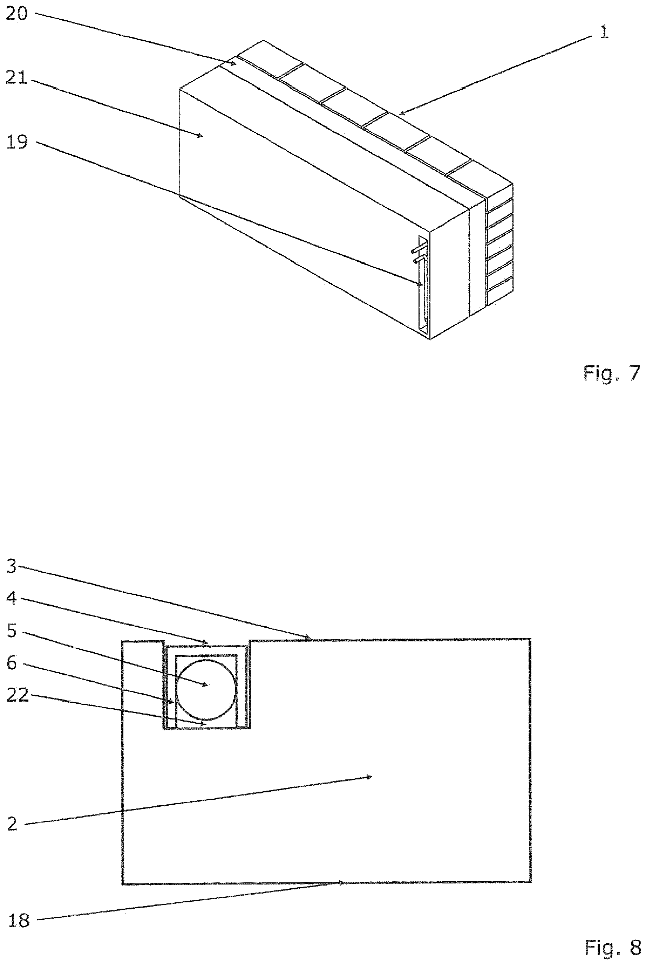

Fig. 7 zeigt eine perspektivische Darstellung einer Hauswand mit einem erfindungsgemäßen Mauerwerksverband 1 als Fassade. Für einen Betrachter, der von außen auf den Mauerwerksverband 1 schaut, sind die im Inneren liegenden Fluidkreisläufe nicht erkennbar, so dass eine solche Fassade von einer üblichen Fassade äußerlich nicht zu unterscheiden ist. Zwischen dem Mauerwerksverband 1 und der inneren tragenden Hauswand 21 ist ein Dämmelement angeordnet. Durch einen Versorgungsschacht 19, der vom Hausinneren leicht zugänglich ist, kann der gegebene Fluidkreislauf an einen nicht dargestellten Wärmetauscher ohne großen Aufwand angeschlossen oder im Falle eines Lecks schnell von diesem wieder getrennt werden.

In Fig. 8 ist eine Schnittdarstellung eines Verblendmauersteines 2 mit einem eingelegten Rohrleitungsabschnitt 5 gezeigt, bevor die Nut 4 mit Mörtel aufgefüllt wird. Der Rohrleitungsabschnitt 5 ist mit dem Befestigungselement 6 so in die Nut 4 eingesetzt, dass der Rohrleitungsabschnitt 5 den Verblendmauerstein 2 nicht berührt, sondern nur das Befestigungselement 6 kontaktiert. Hierdurch bildet sich zwischen dem Rohrleitungsabschnitt 5 und der Fläche der Nut 4, die den geringsten Abstand zur Unterseite 18 des Verblendmauersteines 2 aufweist, ein Spalt 22 aus. Der Mörtel, der in die Nut 4 gefüllt wird, kann sich im Spalt 22 verteilen, so dass zwischen dem Rohrleitungsabschnitt 5 und dem Verblendmauerstein 2 keine Lufteinschlüsse entstehen, die die Effizienz der Energiegewinnung reduzieren.

Natürlich ist die Erfindung nicht auf die dargestellten Ausführungsbeispiele beschränkt. Weitere Ausgestaltungen sind möglich, ohne den Grundgedanken zu verlassen. So ist es beispielsweise besonders vorteilhaft, dass die Nut 4 ein quadratisches Profil mit den Abmessungen 20 mm x 20 mm aufweist und der Abstand zwischen der Stirnseite 14 und dem Beginn der Nut 4 10 mm beträgt. Gemäss der Erfindung ist die Viskosität des Mörtels so zu wählen, dass Lufteinschlüsse zwischen dem Verblendmauerstein und dem Rohrleitungsabschnitt nicht entstehen.

### Bezuaszeichenliste:

- 1: Mauerwerksverband
- 2: Verblendmauerstein
- 3: Oberseite
- 4: Nut
- 5: Rohrleitungsabschnitt
- 6: Befestigungselement
- 7: Abschlussverblendmauerstein
- 8: Schmalseite
- 9: Aussparung
- 10: gebogener Rohrleitungsabschnitt
- 11: Außenfläche
- 12: Widerhacken
- 13: Innenfläche
- 14: Stirnseite
- 15: Rückseite
- 16: Hohlraum
- 17: Profilseite
- 18: Unterseite
- 19: Versorgungsschacht
- 20: Dämmelement
- 21: innere Hauswand
- 22: Spalt

## Patentansprüche

1. Mauerwerksverband mit einer Vielzahl von neben- und/oder übereinander angeordneten Verblendmauersteinen (2), wobei die Verblendmauersteine (2), die jeweils eine Stirnseite (14), eine Rückseite (15) sowie eine Unterseite (18) aufweisen, in Einbaulage an ihrer Oberseite (3) jeweils eine längs gerichtete Ausnehmung aufweisen und die Stirnseiten (14) die Außenfassade des Mauerwerksverbands bilden, auf die die Sonnenstrahlung direkt strahlt, wobei die Ausnehmung näher an der vorderen Stirnseite (14) als an der Rückseite (15) positioniert ist, wobei benachbarte Verblendmauersteine (2) so angeordnet sind, dass ihre Ausnehmungen miteinander fluchten, wobei in die Ausnehmungen benachbarter Verblendmauersteine (2) jeweils ein Rohrleitungsabschnitt (5) eingelegt ist, wobei die Rohrleitungsabschnitte (5) so miteinander verbunden sind, dass ein durch diese Rohrleitungsabschnitte (5) strömendes Fluid einen großen Teil der Wärmeenergie aufnimmt und einer Wärmetauscheinrichtung zuführt, wobei die Ausnehmung im jeweiligen Verblendmauerstein (2) als rechteckförmig ausgeschnittene Nut (4) ausgebildet ist,
**dadurch gekennzeichnet,**
**dass** der jeweilige Rohrleitungsabschnitt (5) mittels wenigstens eines kraft- und/oder formschlüssig in die jeweilige Nut eingesetzten Befestigungselementes (6) in der Nut (4) fixiert ist, wobei der Mauerwerksverband (1) wenigstens einen Abschlussverblendmauerstein (7) aufweist, der in Einbaulage an einer Schmalseite (8) eine sich vertikal erstreckende Aussparung (9) aufweist, die ein gebogenes Rohrleitungselement (10) aufnimmt, wobei der jeweilige Rohrleitungsabschnitt (5) mit dem Befestigungselement (6) so in die Nut (4) eingesetzt ist, dass der Rohrleitungsabschnitt (5) den Verblendmauerstein (2) nicht berührt, sondern nur das Befestigungselement (6) kontaktiert, wobei zwischen dem Rohrleitungsabschnitt (5) und der Fläche der Nut (4), die den geringsten Abstand zur Unterseite (18) des Verblendmauersteines (2) aufweist, ein Spalt (22) ausgebildet ist, wobei Mörtel so in die Nut (4) gefüllt ist, dass sich dieser im Spalt (22) verteilt und die Entstehung von Lufteinschlüssen zwischen dem Rohrleitungsabschnitt (5) und dem Verblendmauerstein (2) unterdrückt.

2. Mauerwerksverband nach Anspruch 1,
**dadurch gekennzeichnet,**
**dass** der jeweilige Rohrleitungsabschnitt (5) mit mehreren Befestigungselementen (6) in der Nut (4) fixiert ist.

3. Mauerwerksverband nach einem oder mehreren der Ansprüche 1 bis 2,
**dadurch gekennzeichnet,**
**dass** mehrere Rohrleitungselemente (10) einen Fluidkreislauf bilden und der Mauerwerksverband (1) mehrere solcher Fluidkreisläufe aufweist.

4. Mauerwerksverband nach einem oder mehreren der Ansprüche 1 bis 3,
**dadurch gekennzeichnet,**
**dass** das Befestigungselement (6) ein Klemmbügel ist.

5. Mauerwerksverband nach einem oder mehreren der Ansprüche 1 bis 4,
**dadurch gekennzeichnet,**
**dass** der Querschnitt des Befestigungselementes (6) ein u-förmiges Profil aufweist.

6. Mauerwerksverband nach einem oder mehreren der Ansprüche 1 bis 4,
**dadurch gekennzeichnet,**
**dass** der Querschnitt des Befestigungselementes (6) ein trapezförmiges Profil aufweist.

7. Mauerwerksverband nach einem oder mehreren der Ansprüche 1 bis 6,
**dadurch gekennzeichnet,**
**dass** wenigstens eine der Außenflächen (11) des Befestigungselements (6) erhaben ist.

8. Mauerwerksverband nach einem oder mehreren der Ansprüche 1 bis 7,
**dadurch gekennzeichnet,**
**dass** wenigstens eine der Außenflächen (11) des Befestigungselements (6) Widerhaken (12) aufweist.

9. Mauerwerksverband nach einem oder mehreren der Ansprüche 1 bis 8,
**dadurch gekennzeichnet,**
**dass** wenigstens eine der Innenflächen (13) des Befestigungselements (6) eine zum jeweiligen Rohrleitungsabschnitt (5) komplementäre Form aufweist.

10. Mauerwerksverband nach einem oder mehreren der Ansprüche 1 bis 9,
**dadurch gekennzeichnet,**
**dass** das Befestigungselement (6) aus Kunststoff besteht.

11. Verfahren zum Aufbau eines Mauerwerksverbandes nach einem oder mehreren der Anspruche 1 bis 10, wobei in einem ersten Arbeitsschritt der jeweilige Rohrleitungsabschnitt (5) zunächst mit einem Befestigungselement (6) in der Nut (4) so fixiert wird, dass der Rohrleitungsabschnitt (5) den Verblendmauerstein (2) nicht berührt und sich zwischen dem Rohrleitungsabschnitt (5) und der Fläche der Nut (4), die den geringsten Abstand zur Unterseite (18) des Verblendmauersteines (2) aufweist, ein Spalt (22) ausgebildet wird, und in einem zweiten Arbeitsschritt Mörtel in die Nut (4) gefüllt wird, so dass der Mörtel den Spalt (22) ausfüllt, wobei der Rohrleitungsabschnitt (5) vollständig vom Mörtel eingeschlossen wird und die Viskosität des Mörtels so zu wählen ist, dass Lufteinschlüsse zwischen dem Verblendmauerstein (2) und dem Rohrleitungsabschnitt (5) nicht entstehen.

## Claims

1. Masonry compound having a multiplicity of facing bricks (2) arranged next to one another and/or above one another, wherein the facing bricks (2), which have in each case a face side (14), a back side (15) and a lower side (18), in the installed state have on their upper side (3) in each case a longitudinally oriented recess and the face sides (14) form the outer facade of the masonry compound upon which the sun radiation shines directly, wherein the recess is positioned closer to the front face side (14) than to the back side (15), wherein adjacent facing bricks (2) are arranged such that their recesses align with one another, wherein a pipeline section (5) is laid in each case into the recesses of adjacent facing bricks (2), wherein the pipeline sections (5) are connected with one another such that a fluid flowing through these pipeline sections (5) absorbs a large proportion of the thermal energy and supplies it to a heat exchange device, wherein the recess in the respective facing brick (2) is formed as a rectangularly cutout groove (4),
**characterised in**
**that** the respective pipeline section (5) is fixed in the groove (4) by means of at least one fastening element (6) set force-fittingly and/or form-fittingly into the respective groove, wherein the masonry compound (1) has at least one finishing facing brick (7) which in the installed state has on a narrow side (8) a cutout (9) extending vertically which accommodates a bent pipeline element (10), wherein the respective pipeline section (5) with the fastening element (6) is inserted into the groove (4) such that the pipeline section (5) does not touch the facing brick (2) but rather only contacts the fastening element (6), wherein between the pipeline section (5) and the surface of the groove (4) which has the smallest distance to the lower side (18) of the facing brick (2) is formed a gap (22), wherein mortar is filled into the groove (4) such that this mortar distributes itself in the gap (22) and inhibits the formation of air inclusions between the pipeline section (5) and the facing brick (2).

2. Masonry compound according to claim 1,
**characterised in**
**that** the respective pipeline section (5) is fixed in the groove (4) with several fastening elements (6).

3. Masonry compound according to one or more of claims 1 to 2,
**characterised in**
**that** several pipeline elements (10) form a fluid circuit and the masonry compound (1) has several such fluid circuits.

4. Masonry compound according to one or more of claims 1 to 3,
**characterised in**
**that** the fastening element (6) is a clamping bracket.

5. Masonry compound according to one or more of claims 1 to 4,
**characterised in**
**that** the cross-section of the fastening element (6) has a U-shaped profile.

6. Masonry compound according to one or more of claims 1 to 4,
**characterised in**
**that** the cross-section of the fastening element (6) has a trapezoidal profile.

7. Masonry compound according to one or more of claims 1 to 6,
**characterised in**
**that** at least one of the outer surfaces (11) of the fastening element (6) is elevated.

8. Masonry compound according to one or more of claims 1 to 7,
**characterised in**
**that** at least one of the outer surfaces (11) of the fastening element (6) has barbs (12).

9. Masonry compound according to one or more of claims 1 to 8,
**characterised in**
**that** at least one of the inner surfaces (13) of the fastening element (6) has a form complementary to the respective pipeline section (5).

10. Masonry compound according to one or more of claims 1 to 9,
**characterised in**
**that** the fastening element (6) is made of plastic.

11. Method for the construction of a masonry compound according to one or more of claims 1 to 10, wherein in a first working step the respective pipeline section (5) is first fixed with a fastening element (6) in the groove (4) such that the pipeline section (5) does not touch the facing brick (2) and a gap (22) is formed between the pipeline section (5) and the surface of the groove (4) which has the smallest distance to the lower side (18) of the facing brick (2), and in a second working step mortar is filled into the groove (4) such that the mortar fills the gap (22), wherein the pipeline section (5) is completely enclosed by mortar and the viscosity of the mortar is to be selected such that air inclusions do not form between the facing brick (2) and the pipeline section (5).

## Revendications

1. Appareil de maçonnerie avec une pluralité de briques de parement (2) agencées à côté les uns des autres et/ou les uns au-dessus des autres, dans lequel les briques de parement (2), qui présentent respectivement une face avant (14), une face arrière (15) ainsi qu'une face inférieure (18), présentent respectivement en position de montage, un évidement dirigé longitudinalement sur leur face supérieure (3) et les faces avant (14) forment la façade extérieure de l'appareil de maçonnerie, sur laquelle le rayonnement du soleil rayonne directement, dans lequel l'évidement est positionné plus près de la face avant (14) que de la face arrière (15), dans lequel les briques de parement (2) adjacentes sont agencées de sorte que leurs évidements soient alignés les uns avec les autres, dans lequel une section de conduite (5) est respectivement insérée dans les évidements des briques de parement (2) adjacentes, dans lequel les sections de conduite (5) sont reliées entre elles de sorte qu'un fluide circulant à travers ces sections de conduite (5) reçoit une grande partie de l'énergie thermique et l'amène à un appareil échangeur de chaleur, dans lequel l'évidement dans la brique de parement (2) respective est réalisé comme une rainure (4) de coupe de forme rectangulaire,
**caractérisé en ce que**
la section de conduite (5) respective est attachée dans la rainure (4) au moyen d'au moins un élément de fixation (6) inséré dans la rainure respective par friction et/ou par complémentarité de forme, dans lequel l'appareil de maçonnerie (1) présente au moins une brique de parement d'extrémité (7) qui, en position de montage, présente un évidement (9) s'étendant verticalement sur un côté étroit (8) qui reçoit un élément de conduite coudé (10), dans lequel la section de conduite (5) respective est insérée dans la rainure (4) avec l'élément de fixation (6) de sorte que la section de conduite (5) ne touche pas la brique de parement (2), mais vient seulement en contact avec l'élément de fixation (6), dans lequel une fente (22) est réalisée entre la section de conduite (5) et la surface de la rainure (4) qui présente la plus petite distance par rapport à la face inférieure (18) de la brique de parement (2), dans lequel le mortier est versé dans la rainure (4) de sorte que celui-ci se répartit dans la fente (22) et réprime la formation d'inclusions d'air entre la section de conduite (5) et la brique de parement (2).

2. Appareil de maçonnerie selon la revendication 1,
**caractérisé en ce que**
la section de conduite (5) respective est attachée avec plusieurs éléments de fixations (6) dans la rainure (4).

3. Appareil de maçonnerie selon une ou plusieurs des revendications 1 à 2,
**caractérisé en ce que**
plusieurs éléments de conduite (10) forment un circuit fluidique et l'appareil de maçonnerie (1) présente plusieurs de ces circuits fluidiques.

4. Appareil de maçonnerie selon une ou plusieurs des revendications 1 à 3,
**caractérisé en ce que**
l'élément de fixation (6) est un étrier de serrage.

5. Appareil de maçonnerie selon une ou plusieurs des revendications 1 à 4,
**caractérisé en ce que**
la coupe transversale de l'élément de fixation (6) présente un profil en forme de U.

6. Appareil de maçonnerie selon une ou plusieurs des revendications 1 à 4,
**caractérisé en ce que**
la coupe transversale de l'élément de fixation (6) présente un profil en forme de trapèze.

7. Appareil de maçonnerie selon une ou plusieurs des revendications 1 à 6,
**caractérisé en ce qu'**
au moins une des faces extérieures (11) de l'élément de fixation (6) est en relief.

8. Appareil de maçonnerie selon une ou plusieurs des revendications 1 à 7,
**caractérisé en ce qu'**
au moins une des faces extérieures (11) de l'élément de fixation (6) présente des moyens d'ancrage (12).

9. Appareil de maçonnerie selon une ou plusieurs des revendications 1 à 8,
**caractérisé en ce qu'**
au moins une des faces intérieures (13) de l'élément de fixation (6) présente une forme complémentaire à la section de conduite (5) respective.

10. Appareil de maçonnerie selon une ou plusieurs des revendications 1 à 9,
**caractérisé en ce que**
l'élément de fixation (6) consiste en du plastique.

11. Procédé de construction d'un appareil de maçonnerie selon une ou plusieurs des revendications 1 à 10, dans lequel la section de conduite (5) respective est d'abord attachée avec un élément de fixation (6) dans la rainure (4) dans une première étape de travail, de sorte que la section de conduite (5) ne touche pas la brique de parement (2) et une fente (22) est réalisée entre la section de conduite (5) et la surface de la rainure (4) qui présente la plus petite distance par rapport à la face inférieure (18) de la brique de parement (2), et dans une seconde étape de travail, du mortier est versé dans la rainure (4),
de sorte que le mortier remplisse la fente (22), dans lequel la section de conduite (5) est complètement fermée par le mortier et la viscosité du mortier est choisie de manière à ce que des inclusions d'air ne se forment pas entre la brique de parement (2) et la section de conduite (5).
